# EUROPEAN PATENT SPECIFICATION

(11) **EP 2 503 734 B1**
(45) Date of publication and mention of the grant of the patent: **08.11.2017**
(21) Application number: 10840447.6
(22) Date of filing: 16.11.2010
(51) Int. Cl.: H04L 12/24, G06F 11/20

(54) **DEVICE AND METHOD FOR REALIZING SWITCH BETWEEN ACTIVE AND STANDBY SERVICES**
VORRICHTUNG UND VERFAHREN ZUR DURCHFÜHRUNG VON UMSCHALTUNGEN ZWISCHEN AKTIVEN UND STANDBY-DIENSTEN
PROCÉDÉ ET DISPOSITIF DE COMMUTATION ENTRE SERVICE ACTIF ET SERVICE EN ATTENTE

(30) Priority: 29.12.2009 CN 200910261739
(43) Date of publication of application: 26.09.2012
(73) Proprietor: ZTE Corporation, Shenzhen, Guangdong 518057 (CN)
(72) Inventor: FENG, Jing, Guangdong 518057 (CN); WANG, Jianwei, Guangdong 518057 (CN)
(74) Representative: Manitz Finsterwald Patentanwälte PartmbB
(86) International application number: PCT/CN2010/078794
(87) International publication number: WO 2011/079658

(56) References cited:
- CN-A- 1 463 081
- CN-A- 1 964 473
- CN-A- 101 043 309
- CN-A- 101 488 844
- CN-A- 101 562 513
- CN-A- 101 572 666
- CN-A- 101 777 996

## Description

### Technical Field

The present invention relates to a switch technology of active and standby main control boards in a communication device, and particularly, to an apparatus and method for realizing an active and standby switch of services.

### Background of the Related Art

The communication device in an important position in a network does not allow the occurrence of single point of failure. These devices are generally equipped with two main control boards, wherein one is used as an active main control board and the other is used as a standby main control board. During normal operation, the active main control board, served as a core of control and management, performs service communication with a service board, and completes normal functions of various modules in the system; and the standby main control board serves as a backup of the active main control board, and when the active main control board has a failure or hardware and software thereof upgrades, the system can perform the active and standby switch automatically or manually or perform the active and standby switch by plugging the active main control board to switch the standby main control board to the active main control board, so as to guarantee the normal operation of original services.

The communication device equipped with two main control boards generally sends respective active signals of the active main control board and standby main control board to the service board through a backplane, and the service board determines that which main control board is the active main control board according to the effectiveness of the two active signals. In consideration of generating interference on the active signals when performing the active and standby switch automatically and manually, especially when plugging the active main control board, the service board uses the active signals after requiring to perform filtering processing on the active signals given by the two main control boards.

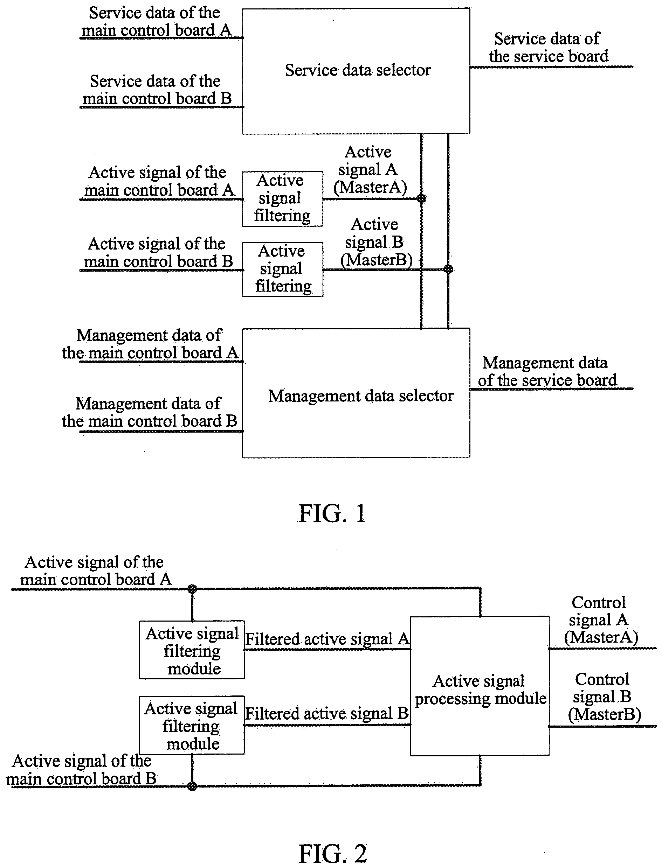

As shown in FIG. 1, it is assumed that the two main control boards are a main control board A and a main control board B respectively, after the active signals of the main control board A and the main control board B are sent to the service board, the filtering processing is performed on the service board to eliminate interference signals, and the filtered control signals of the main control boards are MasterA and MasterB respectively. The service data and management data of the service board are sent to the main control board A and main control board B simultaneously, and an alternative selector is used to select a receiving direction of the service data and management data, that is, a service data selector and a management data selector control the received service data and management data to select the main control board A or the main control board B to serve as the active main control board by the effectiveness of the control signals MasterA and MasterB. Thus, it is guaranteed that both the service data and the management data of the service board communicate with the active main control board, and the standby main control board is in a monitoring state and is always prepared to enter an active working state.

In the related art, the filtering processing on the active signals of the main control boards is implemented using a programmable device generally. Since many times of sampling are required for confirm whether the state of the active signal is effective, the filtered active signal will have a time delay on milliseconds, that is, at least the time on milliseconds is required to determine the effectiveness of the active signal. For example, the active signal of the main control board A serving as the active main control board becomes ineffective, then, after going through the sampling and filtering, it is at least required to go through the time on milliseconds to determine that the control signal MasterA is ineffective; and then the action of active and standby switch is performed to make the main control board B serve as the active main control board, and the active signal of the main control board B is taken as effective, which is also required to go through the time on milliseconds to determine that the control signal MasterB is effective; and the selector makes the main control board B serve as the active main control board according to the effective control signal MasterB, and performs communication of the service data and management data. It can be seen that, since the time delay on milliseconds exists in the process of the active and standby switch, error or loss may be caused to the service data and the management data being transmitted in the process of the active and standby switch. In particularly, devices of synchronous Ethernet and 1588 system have extremely high requirements on real time of a system clock and a 1588 protocol packet, and if the time of the active and standby switch is too long, errors may be caused to the system clock and the 1588 protocol packet, thereby making the system be not able to work normally.

The document CN 1 463 081 A provides a method for achieving fast switching between main and standby devices and discloses the features of the preamble of the independent claims.

### Summary of the Invention

In view of this, the main objective of the present invention is to provide an apparatus and method for realizing an active and standby switch of services, which can decrease time of the active and standby switch, and reduce errors and loss of service data and management data during switching, thereby enhancing stability and reliability of the system.

The above objective is achieved by an apparatus and a method according to the independent claims. Further improvements and embodiments are provided in the dependent claims.

The technical scheme is implemented as follows.

An apparatus for realizing an active and standby switch of services is located in a programmable device of a service board, and the apparatus comprises:
an active signal processing module, configured to determine whether to use a standby main control board as an active main control board by combining effectiveness of a filtered active signal of the active main control board and effectiveness of an active signal of the active main control board at arrival time of a latest sampling period, wherein if active signals of three times of sampling are all effective, the filtered active signal is effective, and if the active signal of one of the three times of sampling is ineffective, the filtered active signal is ineffective. The active signal processing module is specifically configured to: when the received filtered active signal of the active main control board is ineffective, and if the active signal of the active main control board is changed from effectiveness to ineffectiveness at the arrival time of the latest sampling period, determine that a control signal of the active main control board is ineffective, and force a control signal of the standby main control board to be effective promptly to make the standby main control board as the active main control board.

The device further comprises: an active signal filtering module, configured to sample and filter the active signal of the active main control board and an active signal of the standby main control board respectively, and determine the effectiveness of the filtered active signal of the active main control board and a filtered active signal of the standby main control board.

A method for realizing an active and standby switch of services comprises: when a sampled and filtered active signal of an active main control board is ineffective, and an active signal of the active main control board is changed from effectiveness to ineffectiveness at arrival time of a latest sampling period, using a standby main control board as the active main control board promptly, wherein if active signals of three times of sampling are all effective, the filtered active signal is effective, and if the active signal of one of the three times of sampling is ineffective, the filtered active signal is ineffective. Before determining that the sampled and filtered active signal is ineffective, the method further comprises: sampling and filtering active signals of the active main control board and the standby main control board simultaneously, and judging effectiveness of the filtered active signal of the active main control board according to effectiveness of a sampling value every time.

The using the standby main control board as the active main control board is specifically: if the active signal of the active main control board is changed from effectiveness to ineffectiveness at the arrival time of the latest sampling period, determining that a control signal of the active main control board is ineffective, and forcing a control signal of the standby main control board to be effective promptly to make the standby main control board as the active main control board.

The method further comprises: if the filtered active signal of the active main control board is effective, continuing to judge whether a filtered active signal of the standby main control board is effective, and if the filtered active signal of the standby main control board is ineffective, not performing the active and standby switch; and if the filtered active signal of the standby main control board is effective, not performing the active and standby switch, and reporting an error to the two main control boards.

In the apparatus and method for realizing an active and standby switch of services provided by the present invention, for the communication device containing the active main control board and the standby main control board, when the filtered active signal obtained from the active signal of the active main control board going through the sampling and filtering is ineffective, and if the active signal of the active main control board is changed from effectiveness to ineffectiveness at the arrival time of the latest sampling period, the control signal of the active main control board is determined to be ineffective, the control signal of the standby main control board is forced to be effective promptly, and the standby main control board is used as the active main control board, which realizes fast switch of the service data and management data. With the apparatus and method of the present invention, time of the active and standby switch can be reduced, the time of the active and standby switch is decreased to nanoseconds in hardware, influence of operation of the active and standby switch on the system is reduced, error or loss of the service data and management data during switching is reduced, and stability and reliability of the system is enhanced.

### Brief Description of Drawings

FIG. 1 is a block diagram of active signals of main control boards and data processing in the related art.
FIG. 2 is a structure diagram of an apparatus for realizing an active and standby switch of services according to the present invention.
FIG. 3 is a flow chart of a method for realizing an active and standby switch of services according to the present invention.

### Preferred Embodiments of the Present Invention

The basic idea of the present invention is: when a filtered active signal, which is obtained from an active signal of an active main control board going through sampling and filtering, is ineffective, and if the active signal of the active main control board is changed from effectiveness to ineffectiveness at the arrival time of a latest sampling period, using a standby main control board as the active main control board promptly.

The implementation process of the present invention will be described in detail through specific embodiments below.

An apparatus for realizing an active and standby switch of services provided by the present invention is located in a programmable device of a service board, and as shown in FIG. 2, the apparatus includes:
an active signal processing module, configured to determine whether to use a standby main control board as an active main control board by combining effectiveness of a filtered active signal of the active main control board and effectiveness of an active signal of the active main control board at arrival time of a latest sampling period, so as to realize fast switch of the services.

The active signal processing module using the standby main control board as the active main control board is specifically: when the received filtered active signal of the active main control board is ineffective, and if the active signal of the active main control board is changed from effectiveness to ineffectiveness at the arrival time of the latest sampling period, determining that a control signal of the active main control board is ineffective, and forcing a control signal of the standby main control board to be effective promptly to make the standby main control board as the active main control board.

The apparatus also includes: an active signal filtering module, configured to: according to a fixed sampling period, sample and filter the active signal of the active main control board and an active signal of the standby main control board respectively, and determine the effectiveness of the filtered active signal of the active main control board and a filtered active signal of the standby main control board.

According to the apparatus of the present invention, in the present embodiment, a communication device contains two main control boards, namely, a main control board A and a main control board B. It is assumed that, at the beginning, the main control board A is used as the active main control board, the main control board B is used as the standby main control board, and the service board normally communicate with the main control board A; when the main control board A has failure, and the filtered active signal of the main control board A received by the active signal processing module is ineffective, it is judged whether the active signal of the main control board A is changed from effectiveness to ineffectiveness at the arrival time of the latest sampling period; and if the active signal of the main control board A is changed from effectiveness to ineffectiveness, the active signal processing module determines that a control signal MasterA of the active main control board is ineffective, and forces a control signal MasterB of the standby main control board to be effective promptly, so as to make the main control board B as the active main control board and the main control board A as the standby main control board; and thus, the services are switched to the main control board B swiftly to perform communication, which saves the time of the active and standby switch greatly, decreases the time of the active and standby switch to nanoseconds, and guarantees the normal operation of the original services.

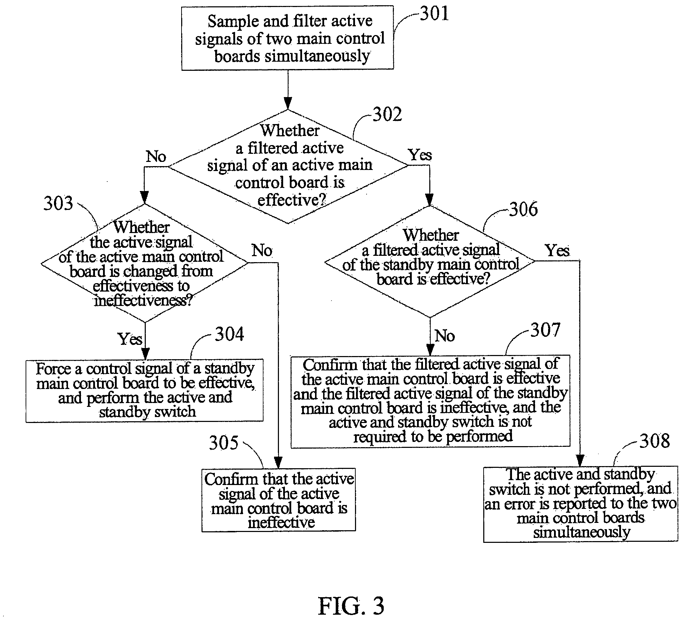

Based on the above device, the present invention provides a method for realizing an active and standby switch of services, the specific implementation process of the method is as shown in FIG. 3, and following steps are included.

In step 301, active signals of two main control boards are sampled and filtered simultaneously.

In this step, an active signal filtering module of a programmable device performs the sampling and filtering on the active signal of the main control board B while performing the sampling and filtering on the active signal of the main control board A, both of them are performed simultaneously.

In the following, the active signal of the main control board A is referred to as an active signal A for short, and the active signal of the main control board B is referred to as an active signal B for short. Taking the main control board A for example: the main control board A sends the active signal A to the programmable device on the service board; the active signal filtering module of the programmable device performs the sampling and filtering on the active signal A many times according to a fixed sampling period, e.g., three times of sampling; wherein, the sampling and filtering process in this step is the related art, which will not be described in detail herein.

In step 302, it is judged whether a filtered active signal of the active main control board is effective, if the filtered active signal of the active main control board is ineffective, step 303 is executed, and if the filtered active signal of the active main control board is effective, step 306 is executed.

In this step, the active signal filtering module of the programmable device judges whether the filtered active signal of the main control board A is effective according to the sampling value every time. The filtered active signal of the main control board A is called as a filtered active signal A for short below. The above step is specifically: if the active signals A of three times of sampling are all effective, the filtered active signal A is effective; and if the active signal A of one of the three times of sampling is ineffective, the filtered active signal A is ineffective.

In the present embodiment, in the start state, the main control board A is used as the active main control board and the main control board B is used as the standby main control board, therefore, in normal, the active signal A is effective and the active signal B is ineffective, that is, the active signals A of the three times of sampling are all effective, and the filtered active signal A is effective; and if the main control board A has failure so as to make the filtered active signal A ineffective, it is indicated that the active signal A of one of the three times of sampling is ineffective.

In step 303, it is judged whether the active signal of the active main control board is changed from effectiveness to ineffectiveness, if yes, step 304 is executed, and if no, step 305 is executed.

In this step, after going through the sampling and filtering, when the filtered active signal A received by the active signal processing module of the programmable device is ineffective, it is judged whether the active signal A is changed from effectiveness to ineffectiveness at the arrival time of the latest sampling period. For example, when going through three times of sampling, the filtered active signal A is ineffective, then the active signal processing module needs to judge whether the active signal A is changed from effectiveness to ineffectiveness at the arrival time of the third time of the sampling period, and if the active signal A is changed from effectiveness to ineffectiveness at the arrival time of the third time of the sampling period, step 304 is executed.

In step 304, a control signal of the standby main control board is forced to be effective, the active and standby switch is performed, and the current processing flow ends.

In this step, after judging that the active signal A is changed from effectiveness to ineffectiveness at the arrival time of the third time of the sampling period, the active signal processing module of the programmable device confirms that a control signal MasterA of the active main control board is ineffective, and forces a control signal MasterB of the standby main control board to be effective; the result can be used as the control signal for service data and management data of the service board performing the active and standby switch, that is, the main control board B is used as the active main control board, and the main control board A is used as the standby main control board, so as to make a service data selector and a management data selector switch the service data and management data to the main control board B swiftly to perform communication through the effective control signal MasterB.

Here, in the above two steps, the active signal processing module of the programmable device needs to consider the effectiveness of the filtered active signal A and the active signal A synthetically, that is, when the filtered active signal A received by the active signal processing module is ineffective, at the same time after judging that the active signal A is changed from effectiveness to ineffectiveness at the arrival time of the latest sampling period, and when a filtered active signal B is still in an ineffective state, the control signal MasterB of the main control board B is forced to be effective promptly.

The above operation can decrease the time of the active and standby switch to nanoseconds, and do not need to wait for performing the operation of the active and standby switch until the active signal filtering module goes through the sampling and confirms that the filtered active signal B is effective ultimately, which saves the switch time greatly, decreases error or loss of the service data and management data during switching, guarantees the normal operation of the original services, and enhances stability and reliability of the system.

In step 305, it is confirmed that the active signal of the active main control board is ineffective, and the current processing flow ends.

In step 306, it is judged whether the filtered active signal of the standby main control board is effective, if ineffective, step 307 is executed, and if effective, step 308 is executed.

In this step, after the active signal filtering module of the programmable device samples and filters the active signal B, it judges whether the filtered active signal B is effective.

In step 307, it is confirmed that the filtered active signal of the active main control board is effective and the filtered active signal of the standby main control board is ineffective, the active and standby switch is not needed to be performed, and the current processing flow ends.

In this step, the active signal filtering module of the programmable device confirms that the filtered active signal A is effective and the filtered active signal B is ineffective, it is indicated that the communication device is in a normal state, and the active signal processing module of the programmable device does not perform any operation on the control signal MasterA of the active main control board and the control signal MasterB of the standby main control board; that is, the effective filtered active signal A is directly used as the control signal MasterA to output, and the ineffective filtered active signal B is used as the control signal MasterB to output, hence, the control signal MasterA is effective, and the control signal MasterB is ineffective. The main control board A still serves as the active main control board, the active and standby switch is not needed to be performed, and the service data and management data still perform communication through the main control board A.

In step 308, the active and standby switch is not performed, and an error is reported to the two main control boards simultaneously.

In this step, after going through the sampling and filtering, the active signal filtering module of the programmable device judges that both the filtered active signal A and the filtered active signal B are effective. However, there can be one condition of existing only one effective filtered active signal in the normal state, that is, the filtered active signal A is effective, or the filtered active signal B is effective. Therefore, it is indicated that the communication device is in an abnormal state at the moment, and the programmable device reports the error information to the two main control boards.

However, the active signal processing module of the programmable device does not perform any operation on the control signal MasterA of the active main control board and the control signal MasterB of the standby main control board, that is, the effective filtered active signal A is used as the control signal MasterA and the effective filtered active signal B is used as the control signal MasterB directly. At the moment, even though both the control signals, MasterA and MasterB, are effective, the active and standby switch of the services is not performed, the main control board A which is used as the active main control board previously is still used as the active main control board, and the service data and management data still perform communication through the main control board A.

The above description is only the preferred embodiments of the present invention, which is not used to limit the protection scope of the present invention. Any modification, equivalent substitution and improvement, etc., made within the principle of the present invention as defined in the claims should be comprised in the protection scope of the present invention.

## Claims

1. An apparatus for realizing an active and standby switch of services, located in a programmable device of a service board, **characterized by** comprising:
an active signal processing module, configured to determine whether to use a standby main control board as an active main control board by combining effectiveness of a filtered active signal of the active main control board and effectiveness of an active signal of the active main control board at arrival time of a latest sampling period, wherein if active signals of three times of sampling are all effective, the filtered active signal is effective, and if the active signal of one of the three times of sampling is ineffective, the filtered active signal is ineffective.

2. The apparatus according to claim 1, wherein, the active signal processing module is specifically configured to: when the received filtered active signal of the active main control board is ineffective, and if the active signal of the active main control board is changed from effectiveness to ineffectiveness at the arrival time of the latest sampling period, determine that a control signal of the active main control board is ineffective, and force a control signal of the standby main control board to be effective promptly to make the standby main control board as the active main control board.

3. The apparatus according to claim 1 or 2, further comprising: an active signal filtering module, configured to sample and filter the active signal of the active main control board and an active signal of the standby main control board respectively, and determine the effectiveness of the filtered active signal of the active main control board and a filtered active signal of the standby main control board.

4. A method for realizing an active and standby switch of services, **characterized by** comprising:
when a sampled and filtered active signal of an active main control board is ineffective, and an active signal of the active main control board is changed from effectiveness to ineffectiveness at arrival time of a latest sampling period, using a standby main control board as the active main control board promptly, wherein if active signals of three times of sampling are all effective, a filtered active signal is effective, and if the active signal of one of the three times of sampling is ineffective, the filtered active signal is ineffective.

5. The method according to claim 4, wherein, before determining that the sampled and filtered active signal is ineffective, the method further comprises: sampling and filtering active signals of the active main control board and the standby main control board simultaneously (301), and judging effectiveness of the filtered active signal of the active main control board (302) according to effectiveness of a sampling value every time.

6. The method according to claim 4 or 5, wherein, the using the standby main control board as the active main control board is specifically: if the active signal of the active main control board is changed from effectiveness to ineffectiveness at the arrival time of the latest sampling period, determining that a control signal of the active main control board is ineffective, and forcing a control signal of the standby main control board to be effective promptly to make the standby main control board as the active main control board (304).

7. The method according to claim 6, further comprising: if the filtered active signal of the active main control board is effective, continuing to judge whether a filtered active signal of the standby main control board is effective (306), and if the filtered active signal of the standby main control board is ineffective, not performing the active and standby switch (307); and if the filtered active signal of the standby main control board is effective, not performing the active and standby switch, and reporting an error to the two main control boards (308).

## Patentansprüche

1. Vorrichtung zum Realisieren eines Umschaltens von Diensten zwischen aktiv und Bereitschaft, die in einer programmierbaren Vorrichtung einer Dienstplatine angeordnet ist, **dadurch gekennzeichnet, dass** sie umfasst:
ein Verarbeitungsmodul für aktive Signale, das ausgestaltet ist, um zu bestimmen, ob eine Bereitschafts-Hauptsteuerungsplatine als aktive Hauptsteuerungsplatine verwendet werden soll, indem es eine Wirksamkeit eines gefilterten aktiven Signals der aktiven Hauptsteuerungsplatine und eine Wirksamkeit eines aktiven Signals der aktiven Hauptsteuerungsplatine bei einem Ankunftszeitpunkt einer aktuellsten Abtastperiode kombiniert, wobei, wenn aktive Signale von drei Abtastzeitpunkten allesamt wirksam sind, das gefilterte aktive Signal wirksam ist, und wenn das aktive Signal von einem der drei Abtastzeitpunkte nicht wirksam ist, das gefilterte aktive Signal nicht wirksam ist.

2. Vorrichtung nach Anspruch 1, wobei das Verarbeitungsmodul für aktive Signale speziell ausgestaltet ist, um: wenn das empfangene gefilterte aktive Signal der aktiven Hauptsteuerungsplatine nicht wirksam ist und wenn das aktive Signal der aktiven Hauptsteuerungsplatine beim Ankunftszeitpunkt der aktuellsten Abtastperiode von Wirksamkeit auf Unwirksamkeit geändert wird, zu bestimmen, dass ein Steuerungssignal der aktiven Hauptsteuerungsplatine nicht wirksam ist, und um zu erzwingen, dass ein Steuerungssignal der Bereitschafts-Hauptsteuerungsplatine sofort wirksam ist, um die Bereitschafts-Hauptsteuerungsplatine zu der aktiven Hauptsteuerungsplatine zu machen.

3. Vorrichtung nach Anspruch 1 oder 2, ferner umfassend: ein Filterungsmodul für aktive Signale, das ausgestaltet ist, um das aktive Signal der aktiven Hauptsteuerungsplatine bzw. ein aktives Signal der Bereitschafts-Hauptsteuerungsplatine abzutasten und zu filtern, und um die Wirksamkeit des gefilterten aktiven Signals der aktiven Hauptsteuerungsplatine und eines gefilterten aktiven Signals der Bereitschafts-Hauptsteuerungsplatine zu bestimmen.

4. Verfahren zum Realisieren eines Umschaltens von Diensten zwischen aktiv und Bereitschaft, **dadurch gekennzeichnet, dass** es umfasst, dass:
wenn ein abgetastetes und gefiltertes aktives Signal einer aktiven Hauptsteuerungsplatine nicht wirksam ist und ein aktives Signal der aktiven Hauptsteuerungsplatine bei einem Ankunftszeitpunkt einer aktuellsten Abtastperiode von Wirksamkeit auf Unwirksamkeit verändert wird, sofort eine Bereitschafts-Hauptsteuerungsplatine als aktive Hauptsteuerungsplatine verwendet wird, wobei dann, wenn aktive Signale von drei Abtastzeitpunkten allesamt wirksam sind, ein gefiltertes aktives Signal wirksam ist, und wenn das aktive Signal von einem der drei Abtastzeitpunkte nicht wirksam ist, das gefilterte aktive Signal nicht wirksam ist.

5. Verfahren nach Anspruch 4, wobei das Verfahren vor dem Bestimmen, dass das abgetastete und gefilterte aktive Signal nicht wirksam ist, ferner umfasst, dass: aktive Signale der aktiven Hauptsteuerungsplatine und der Bereitschafts-Hauptsteuerungsplatine gleichzeitig abgetastet und gefiltert werden (301) und die Wirksamkeit des gefilterten aktiven Signals der aktiven Hauptsteuerungsplatine in Übereinstimmung mit der Wirksamkeit eines Abtastwerts jedes Mal beurteilt wird (302).

6. Verfahren nach Anspruch 4 oder 5, wobei die Verwendung der Bereitschafts-Hauptsteuerungsplatine als aktiver Hauptsteuerungsplatine speziell erfolgt: wenn beim Ankunftszeitpunkt der aktuellsten Abtastperiode das aktive Signal der aktiven Hauptsteuerungsplatine von Wirksamkeit auf Unwirksamkeit geändert wird, festgestellt wird, dass ein Steuerungssignal der aktiven Hauptsteuerungsplatine nicht wirksam ist, und erzwungen wird, dass ein Steuerungssignal der Bereitschafts-Hauptsteuerungsplatine sofort wirksam wird, um die Bereitschafts-Hauptsteuerungsplatine zu der aktiven Hauptsteuerungsplatine zu machen (304).

7. Verfahren nach Anspruch 6, das ferner umfasst, dass: wenn das gefilterte aktive Signal der aktiven Hauptsteuerungsplatine nicht wirksam ist, mit dem Beurteilen fortgefahren wird, ob ein gefiltertes aktives Signal der Bereitschafts-Hauptsteuerungsplatine wirksam ist (306), und wenn das gefilterte aktive Signal der Bereitschafts-Hauptsteuerungsplatine nicht wirksam ist, das Umschalten zwischen aktiv und Bereitschaft nicht ausgeführt wird (307); und wenn das gefilterte aktive Signal der Bereitschafts-Hauptsteuerungsplatine wirksam ist, das Umschalten zwischen aktiv und Bereitschaft nicht ausgeführt wird, und ein Fehler an die zwei Hauptsteuerungsplatinen gemeldet wird (308).

## Revendications

1. Appareil de réalisation d'une commutation de services entre service actif et service de secours, situé dans un dispositif programmable d'une carte de service, **caractérisé en ce qu'**il comprend :
un module de traitement de signal actif, configuré pour déterminer s'il convient d'utiliser une carte de commande principale de secours comme une carte de commande principale active par combinaison de l'efficacité d'un signal actif filtré de la carte de commande active principale et de l'efficacité d'un signal actif de la carte de commande principale active au moment d'arrivée de la dernière période d'échantillonnage, où si les signaux actifs de trois échantillonnages sont tous efficaces, le signal actif filtré est efficace, et si le signal actif de l'un des trois échantillonnages est inefficace, le signal actif filtré est inefficace.

2. Appareil selon la revendication 1, dans lequel le module de traitement de signal actif est spécifiquement configuré pour : lorsque le signal actif filtré reçu de la carte de commande principale active est inefficace, et si le signal actif de la carte de commande principale active passe de l'efficacité à l'inefficacité au moment d'arrivée de la dernière période d'échantillonnage, déterminer qu'un signal de commande de la carte de commande principale active est inefficace, et forcer un signal de commande de la carte de commande principale de secours d'être efficace rapidement pour faire en sorte que la carte de commande principale de secours serve de carte de commande principale active.

3. Appareil selon la revendication 1 ou 2, comprenant en outre : un module de filtrage de signal actif, configuré pour échantillonner et filtrer le signal actif de la carte de commande principale active et un signal actif de la carte de commande principale de secours respectivement, et déterminer l'efficacité du signal actif filtré de la carte de commande principale active et d'un signal actif filtré de la carte de commande principale de secours.

4. Procédé de réalisation d'une commutation de services entre service actif et service de secours, **caractérisé en ce qu'**il comprend :
lorsqu'un signal actif échantillonné et filtré d'une carte de commande principale active est inefficace, et lorsqu'un signal actif de la carte de commande principale active passe de l'efficacité à l'inefficacité au moment d'arrivée d'une dernière période d'échantillonnage, l'utilisation d'une carte de commande principale de secours comme étant la carte de commande principale active rapidement, où si les signaux actifs de trois échantillonnages sont tous efficaces, un signal actif filtré est efficace, et si le signal actif de l'un des trois d'échantillonnages est inefficace, le signal actif filtré est inefficace.

5. Procédé selon la revendication 4, dans lequel, avant de déterminer que le signal actif échantillonné et filtré est inefficace, le procédé comprend en outre : l'échantillonnage et le filtrage des signaux actifs de la carte de commande principale active et de la carte de commande principale de secours simultanément (301), et le jugement de l'efficacité du signal actif filtré de la carte de commande principale active (302) selon l'efficacité d'une valeur d'échantillonnage à chaque fois.

6. Procédé selon la revendication 4 ou 5, dans lequel, l'utilisation de la carte de commande principale de secours comme étant la carte de commande principale active consiste spécifiquement à : si le signal actif de la carte de commande principale active passe de l'efficacité à l'inefficacité au moment d'arrivée de la dernière période d'échantillonnage, déterminer qu'un signal de commande de la carte de commande principale active est inefficace, et forcer un signal de commande de la carte de commande principale de secours d'être efficace rapidement pour faire en sorte que la carte de commande principale de secours serve de carte de commande principale active (304).

7. Procédé selon la revendication 6, comprenant en outre le fait : si le signal actif filtré de la carte de commande principale active est efficace, de continuer à juger si un signal actif filtré de la carte de commande principale de secours est efficace (306), et si le signal actif filtré de la carte de commande principale de secours est inefficace, de ne pas effectuer la commutation entre service actif et service de secours (307) ; et si le signal actif filtré de la carte de commande principale de secours est efficace, de ne pas effectuer la commutation entre service actif et service de secours, et de signaler une erreur aux deux cartes de commande principales (308).
